# EUROPÄISCHE PATENTSCHRIFT

(11) **EP 1 638 659 B1**
(45) Veröffentlichungstag und Bekanntmachung des Hinweises auf die Patenterteilung: **14.03.2007**
(21) Anmeldenummer: 04738728.7
(22) Anmeldetag: 21.06.2004
(51) Int. Cl.: A63F 13/02

(54) **VORRICHTUNG ZUR EINGABE VON STEUERSIGNALEN BEI EINEM COMPUTERBASIERTEN SIMULIERTEN TISCHFUSSBALLSPIEL**
DEVICE FOR INPUTTING CONTROL SIGNALS FOR A COMPUTER-BASED SIMULATED TABLE FOOTBALL GAME
DISPOSITIF D'ENTREE DE SIGNAUX DE COMMANDE POUR UN JEU DE FOOTBALL DE TABLE SIMULE PAR ORDINATEUR

(30) Priorität: 27.06.2003 DE 10329181
(43) Veröffentlichungstag der Anmeldung: 29.03.2006
(73) Patentinhaber: Albert-Ludwigs-Universität Freiburg, 79085 Freiburg (DE)
(72) Erfinder: NEBEL, Bernhard, 79227 Schallstadt (DE); THILO, Weigel, 79102 Freiburg (DE)
(74) Vertreter: Lucht, Silvia
(86) Internationale Anmeldenummer: PCT/DE2004/001278
(87) Internationale Veröffentlichungsnummer: WO 2005/005005

(56) Entgegenhaltungen:
- EP-A- 1 072 296
- US-A- 6 048 271
- US-B1- 6 176 780

## Beschreibung

Die Erfindung geht aus von einer Vorrichtung zur Eingabe von Steuersignalen bei einem computerbasierten simulierten Tischfußballspiel nach dem Oberbegriff des Anspruchs 1.

Bei einem rein mechanischen Tischfußball-Spieltisch sind zwei Mannschaften mit beispielsweise je elf Spielfiguren vorgesehen. Die Spielfiguren einer Mannschaft sind üblicherweise in vier Positionsreihen angeordnet: ein Torhüter, zwei Abwehrspieler, fünf Mittelfeldspieler und drei Stürmer. Alle Spieler einer Positionsreihe sind an einer verschiebbaren und drehbaren Stange angeordnet. Jede Stange hat damit zwei Freiheitsgrade. Über die Stangen können die Spieler bewegt und der Ball gespielt werden. Derartige Tischfußballspiele werden auch als Tischkicker bezeichnet.

Aus dem Stand der Technik sind computerbasierte simulierte Tischfußballspiele bekannt, bei denen das Spielfeld, die Spieler und der Ball auf einem Bildschirm angezeigt werden. Wie bei einem rein mechanischen Tischfußball-Spieltisch sind die Spieler in Positionsreihen angeordnet. Die zugehörigen Stangen können ebenfalls auf dem Bildschirm angezeigt werden. Um die angezeigten Positionsreihen zu verschieben und zu drehen, werden Steuerdaten über eine Computer-Maus, eine herkömmliche Computertastatur, einen Joystick oder eine übliche Steuerung für Spielkonsolen eingegeben. Es können entweder zwei Benutzer gegeneinander spielen oder nur ein Benutzer gegen den Computer. Diese computerbasierten Tischfußballspiele können zwar auf nahezu jedem beliebigen Personal Computer gespielt werden, jedoch ist die Bedienung erschwert. Die Betätigung einer Tastatur unterscheidet sich von der Betätigung der Stangen eines rein mechanischen Tischfußball-Spieltisches grundlegend. Mit einer Computertastatur oder einer Computer-Maus können die Dreh- und Verschiebe-Bewegungen der Stange eines mechanischen Tischkickers nicht ausgeführt werden. Eine echte Simulation ist daher nicht möglich. Ein weiterer Nachteil besteht darin, dass zum Bewegen der vier Positionsreihen mit Spielern einer Mannschaft entweder ständig ein Umschalten auf der Tastatur notwendig ist oder aber eine Vielzahl von Tasten benutzt werden müssen, die sich der Benutzer nicht ohne weiteres merken kann. Bei einfacheren computerbasierten Tischfußballspielen wird das Umschalten dadurch umgangen, dass bei einer Betätigung der Tastatur oder der Maus alle Positionsreihen gleichzeitig bewegt werden. Dadurch entsteht der Nachteil, dass kaum noch Gemeinsamkeiten mit einem Tischfußballspiel auf einem rein mechanischen Tischfußball-Spieltisch bestehen.

Darüber hinaus sind computerbasierte simulierte Fußballspiele bekannt, die nicht auf der Simulation der drehbaren und verschiebbaren Stangen eines Tischkickers beruhen. Zur Steuerung der Spielfiguren von Hand sind für den Benutzer beispielsweise Knöpfe vorgesehen. Meist werden die Spielfiguren dabei nur parallel zum Spielfeld verschoben. Dabei ist der Knopf mehrfach zu betätigen, bis die Spielfigur an der gewünschten Position steht. Treffen eine Spielfigur und der Ball zusammen, so prallt der Ball von der Spielfigur auf eine Art ab, die durch die verwendete Software vorgegeben ist. Ein Treten oder Kicken des Balles durch eine Spielfigur mit einer durch den Benutzer eingegebenen Kraft oder einem Drehmoment ist bei derartigen simulierten Fußballspielen nicht möglich.

Demgegenüber hat die erfindungsgemäße Vorrichtung mit den Merkmalen des Anspruchs 1 den Vorteil, dass die Eingabe der Steuerdaten auf identische Weise erfolgt, wie das Bewegen der Positionsreihen eines rein mechanischen Tischfußball-Spieltisches. In dem Gehäuse sind entweder für jede Positionsreihe einer Mannschaft oder für jede Positionsreihe beider Mannschaften Stangen vorgesehen. Diese sind in dem Gehäuse verschiebbar und drehbar gelagert. Die Translation erfolgt dabei in axialer Richtung und die Rotation um die Achse der Stangen.

Der Verschiebeweg ist wie bei einem mechanischen Tischkicker durch Begrenzungen an den Stangen limitiert. Als Begrenzungen können Ringe oder Scheiben an den Stangen innerhalb oder außerhalb des Gehäuses dienen. Die Verschiebewege der verschiedenen Stangen können unterschiedlich sein. Wie bei einem mechanischen Tischkicker kann der Torhüter beispielsweise nur vor dem Tor verschoben werden. Der Verschiebeweg der den Abwehrspielern oder den Stürmern zugeordneten Stange kann größer sein als der der Mittelfeldspieler. Die Länge des Verschiebeweges ist entweder identisch wie bei mechanischen Tischkickern oder etwas kürzer. Sie wird jedoch so gewählt, dass die Betätigung der Stangen vergleichbar ist mit derjenigen bei mechanischen Tischkickern.

Für jede der Stangen sind an dem Gehäuse zwei oder mehr Lager vorgesehen. Die Stangen können um ihre eigene Achse um 360° oder mehr gedreht werden. Dabei ist kein Anschlag vorgesehen. Wie bei einem mechanischen Tischkicker ist die Rotation nicht begrenzt.

An jeder Stange sind zwei Sensoren vorgesehen, welche die Translation und Rotation der Stange erfassen. Die Sensoren ermitteln die absolute Position der Stange bezüglich eines vorgegebenen Nullpunktes, indem sie die Stange oder einen Geber an der Stange kontinuierlich durch mechanisch berührende Ankopplung oder berührungsfrei abtasten. Die absolute Position einer Stange setzt sich aus einem Drehwinkel und einem Verschiebeweg zusammen. Beide Werte beziehen sich auf den vorgegebenen Nullpunkt. Die zu den Positionen gehörenden elektrischen Signale werden über die Schnittstelle an den Rechner weitergeleitet. Die entsprechende Position der Spielfiguren des Tischkickers wird anschließend auf einer Anzeigeeinrichtung, beispielsweise einem Bildschirm des Rechners dargestellt. Anders als bei bekannten computerbasierten simulierten Fußballspielen, bei denen zum Bewegen der Spielfiguren mehrfach eine Taste oder ein Knopf betätigt werden muss, kann bei der erfindungsgemäßen Vorrichtung die Bewegung einer Stange in eine identische Bewegung der der Stange zugeordneten Spielfiguren auf der Anzeigeeinrichtung umgesetzt werden. Hierzu ist eine geeignete Software vorgesehen. Die Simulation des Tischkickers ist damit sehr nahe an der Realität eines mechanischen Tischkickers. Das Empfinden des Spielers beim Betätigen der Stangen unterscheidet sich nicht von dem Empfinden beim Spielen mit einem realen Tischkicker. Aus der Position der Stange, insbesondere aus dem eingestellten Verschiebeweg kann der Spieler auch ohne auf die Anzeigeeinrichtung zu blicken die Position der Spielfiguren erkennen.

Die Sensoren erlauben die Bestimmung der absoluten Position der Stange im Bezug auf einen vorgegebenen Nullpunkt zu jedem beliebigen Zeitpunkt. Je nach Art der Sensoren wird entweder der absolute Wert bezüglich des Nullpunkts gemessen, oder es wird der relative Verschiebeweg zwischen einer Anfangs- und einer Endposition gemessen. Im ersten Fall folgt die Position der Stange direkt aus der Messung. Es ist allenfalls noch notwendig, die Messgröße, wie beispielsweise den Strom, in einen Weg oder Winkel umzurechnen. Im zweiten Fall ist die absolute Position der Stange aus dem relativen Verschiebeweg und der Anfangsposition zu berechnen. Diese Berechnung kann entweder durch den Rechner erfolgen, an den die Vorrichtung angeschlossen ist, oder die Vorrichtung kann hierzu mit einem gesonderten Rechner ausgestattet sein.

Sofern notwendig kann aus den verschiedenen Positionen durch Bildung der ersten und zweiten Ableitung nach der Zeit die Geschwindigkeit und die Beschleunigung berechnet werden. Zur Bestimmung der Geschwindigkeit und/oder der Beschleunigung können auch spezielle Sensoren vorgesehen sein.

Die auf der Anzeigeeinrichtung des Rechners, an den die Vorrichtung angeschlossen ist, angezeigte Darstellung der Spielfiguren und des Balles kann entweder zwei- oder dreidimensional sein. Dies hängt von der Software ab. Die erfindungsgemäße Vorrichtung zur Steuerung unterstützt sowohl drei- als auch zweidimensionale Darstellungen.

Die erfindungsgemäße Vorrichtung erlaubt sowohl das Spiel zweier Benutzer gegeneinander als auch das Spiel eines Benutzers gegen einen computergesteuerten Gegner. Bei einer Vorrichtung für zwei Benutzer ist eine entsprechende Anzahl von Stangen vorgesehen. Diese können entweder in einem Gehäuse oder in zwei Gehäusen untergebracht sein. Spielt lediglich ein Benutzer gegen den Computer, so reicht die Hälfte der Anzahl der Stangen. Es können auch zwei zum Spiel eines Benutzers vorgesehene Vorrichtungen so miteinander oder mit einem Rechner gekoppelt sein, dass zwei Benutzer gegeneinander spielen können.

Spielen zwei Benutzer gegeneinander, so können diese auch räumlich getrennt voneinander sein. Die über die erfindungsgemäße Vorrichtung in einen Rechner eingegebenen Daten können über ein Computernetz auch an andere Rechner übermittelt werden. Erfolgt der Austausch der Daten über ein Computernetz, so können sich die beiden gegeneinander spielenden Benutzer an verschiedenen Orten befinden.

Üblicherweise sind bei einem Tischfußballspiel für jede Mannschaft vier Positionsreihen und damit jeweils vier Stangen vorgesehen. Diese Anzahl kann jedoch variieren. Die Vorrichtung kann daher mit entsprechend mehr oder weniger Stangen ausgestattet sein.

Die erfindungsgemäße Vorrichtung kann kostengünstig hergestellt werden. Sie eignet sich sowohl zum Einsatz im privaten Bereich als auch in öffentlich zugänglichen Spielhallen oder Bars. Sie kann somit auf dem Heim-PC-Markt als auch für kommerzielle Anwender angeboten werden.

Nach einer vorteilhaften Ausgestaltung der Erfindung sind die Stangen einer Mannschaft nebeneinander und parallel zueinander angeordnet. Die mit Griffen versehenen Enden ragen an der einen Seite des Gehäuses aus diesem heraus. Gegebenenfalls können die Stangen bei Nichtgebrauch der Vorrichtung aus dem Gehäuse herausgenommen oder in kleinere Einheiten zerlegt werden. Hierzu eignen sich auch Stangen mit teleskopartigem Aufbau.

Erfindungsgemäße Vorrichtungen zum Spiel zweier Benutzer gegeneinander weisen ebenfalls parallel zueinander und nebeneinander angeordnete Stangen auf, deren Enden an zwei sich gegenüberliegenden Seiten eines Gehäuses nach außen ragen.

Nach einer weiteren vorteilhaften Ausgestaltung der Erfindung ist an den Stangen eine Bremse vorgesehen zur Verzögerung der Rotation einer Stange in eine Richtung bis hin zur Blockade. Die Bremse ist über eine Schnittstelle mit dem Rechner verbunden, um die Bremse durch den Rechner auszulösen, wenn eine bestimmte Spielsituation bei dem simulierten Tischfußballspiel gegeben ist. Diese Spielsituation liegt vor, wenn der Ball zwischen einer Spielfigur und dem Spielfeld eingeklemmt wird. Beim einem mechanischen Tischkicker kann der Benutzer in diesem Fall die zu der Spielfigur gehörende Stange nur noch in eine Richtung drehen. In die andere Drehrichtung ist die Stange blockiert. Das Verschieben der Stange ist jedoch möglich. Um diese Situation bei der erfindungsgemäßen Vorrichtung für den Benutzer haptisch zu simulieren, wird die Bremse durch den Rechner ausgelöst. Durch mechanisch berührende Ankopplung an die Stange beispielsweise Eingreifen in das Getriebe oder berührungsfrei durch den Aufbau eines Magnetfeldes, welches einem an der Stange angeordneten Permanentmagneten entgegenwirkt, wird die Rotation der Stange in eine Richtung abgebremst oder vollständig blockiert. Liegt die Spielsituation nicht mehr vor, wird die Bremse wieder gelöst. Auf diese Weise kann außerdem das Treten oder Kicken des Balles durch eine Spielfigur einer Stange haptish an den Benutzer übermittelt werden. In diesem Fall wirkt die Bremse jedoch wesentlich schwächer auf die Stange ein. Der Benutzer spürt damit lediglich eine geringe Kraft, die dem von ihm auf die Stange ausgeübten Drehmoment entgegenwirkt. Ein derartiger Widerstand ist beim mechanischen Tischkicker beim Spielen des Balles ebenfalls gegeben.

Nach einer vorteilhaften Ausgestaltung der Erfindung sind als Sensoren Potentiometer vorgesehen. Zum Auslösen der Potentiometer sind an den Stangen Getriebe vorgesehen. Das Getriebe kann beispielsweise aus Zahnrädern und einer Zahnstange bestehen. Bei einer Drehung oder Verschiebung der Stange werden die Potentiometer betätigt und der Widerstand der Potentiometer verändert. Dadurch ändert sich bei konstanter Spannung der Strom. Dieser Strom wird an den Rechner weitergeleitet. Da jeder Einstellung eines Potentiometer ein absoluter Widerstandswert und damit ein absoluter Strom entspricht, sind die zu den Widerstandswerten gehörenden Koordinaten der Stange absolut festgelegt und bestimmbar. Der absoluten Werte beziehen sich auf einen vorzugebenden Nullpunkt.

Nach einer weiteren vorteilhaften Ausgestaltung der Erfindung sind als Sensoren optische Entfernungsmesser an dem Gehäuse vorgesehen. Zum Auslösen der Entfernungsmesser sind an der Stange Geber angeordnet. Für den Sensor für die Translation kann an der Stange zum Beispiel eine Scheibe senkrecht zur Achse der Stange vorgesehen sein. Für den Sensor für die Rotation kann an der Stange mit einer Scheibe ausgestattet sein, welche ein Muster aufweist, beispielsweise einen Strichcode. Darüber hinaus ist auch eine gegen die Achse der Stange geneigte oder exzentrisch zur Achse angeordnete Scheibe möglich. Beim Drehen der Stange ändert sich entweder das Muster der Scheibe oder der Abstand zwischen dem ortsfesten optischen Entfernungsmesser und einem vorgegebenen Messbereich auf der Scheibe. Aus dem abgetasteten Muster oder der gemessenen Entfernung kann auf den Drehwinkel rückgeschlossen werden.

Darüber hinaus eignen sich als Sensoren zur Bestimmung der Position der Stangen die von Computermäusen bekannten optischen oder mechanischen Elemente. Dabei werden Elemente wie Kugeln oder Räder eingesetzt, oder der zurückgelegte Weg wird optisch ermittelt. Im Unterschied zur Anwendung bei einer Computermaus sind die Sensoren ortsfest während die Stange gegenüber den Sensoren bewegt wird. Das Prinzip beruht jedoch auf einer relativen Bewegung zwischen Sensor und Untergrund beziehungsweise Stange und ist daher auch hier anwendbar. Da die dabei der relative Verschiebeweg bestimmt wird, ist zum Ermitteln der absoluten Position der Stange die Eichung auf einen vorgegebenen Nullpunkt notwendig. Dies kann beim Einschalten der Vorrichtung automatisch durchgeführt werden.

Die Stangen der erfindungsgemäßen Vorrichtung können beispielsweise aus Kunststoff, Metall oder einem Verbundstoff bestehen. Vorteilhafterweise ist das durch den Benutzer betätigte Ende mit einem Griff versehen.

Weitere Vorteile und vorteilhafte Ausgestaltungen der Erfindung sind den Ansprüchen zu entnehmen.

### Zeichnung

In der Zeichnung ist ein Ausführungsbeispiel der Erfindung dargestellt. Es zeigt:
- Figur 1: Vorrichtung zur Eingabe von Steuersignalen für ein computerbasiertes simuliertes Tischfußballspiel in perspektivischer Ansicht,
- Figur 2: Ansicht der Vorrichtung zur Eingabe von Steuersignalen gemäß Figur 1 von oben bei geöffnetem Gehäuse,
- Figur 3: Schnitt durch die Vorrichtung gemäß Figur 2 an der in Figur 2 mit A -A markierten Stelle,
- Figur 4: Darstellung des simulierten Tischkickers auf einem Bildschirm.

### Beschreibung des Ausführungsbeispiels

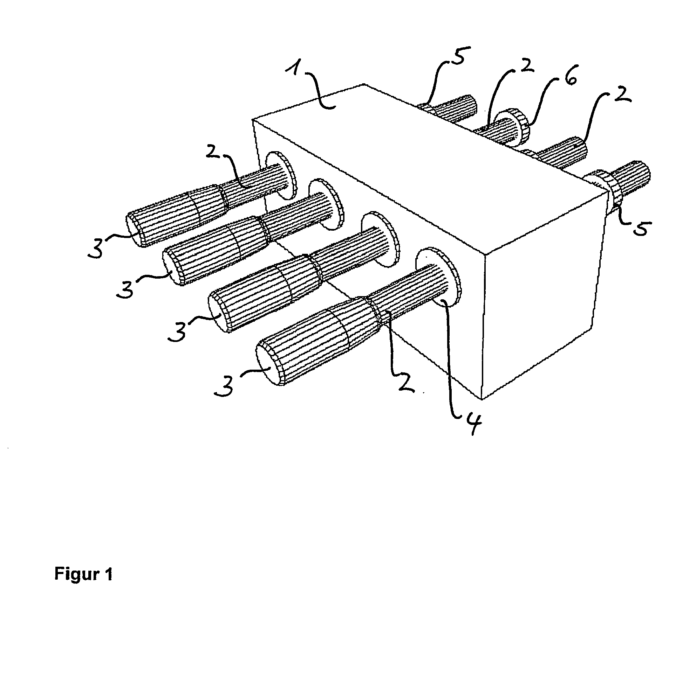

In Figur 1 ist eine Vorrichtung zur Eingabe von Steuersignalen für ein computerbasiertes simuliertes Tischfußballspiel in perspektivischer Ansicht dargestellt. In einem Gehäuse 1 sind vier Stangen 2 verschiebbar und drehbar gelagert. Die Enden der Stangen, welche durch einen in der Zeichnung nicht dargestellten Benutzer betätigt werden, sind mit einem Griff 3 ausgestattet. Stangen 2 und Griffe 3 haben einen kreisrunden Querschnitt. Zur leichteren Bedienbarkeit weisen die Griffe 3 einen größeren Durchmesser auf als die Stangen 2.

Die Stangen 2 sind durch das Gehäuse 1 so hindurchgeführt, dass beide Enden der Stangen 2 aus dem Gehäuse 1 herausragen. Die Wände des Gehäuses 1 weisen für die Stangen 2 Öffnungen auf. Die Öffnungen sind mit einem Lager 4 für die Stangen 2 versehen. Die Lager 4 sorgen dafür, dass die Stangen 2 leicht verschoben und gedreht werden können. Hierzu können in den Lagern beispielsweise Kugeln oder Walzen vorgesehen sein, auf denen die Stangen abrollen oder gleiten. Die Kugeln oder Walzen sind in der Zeichnung nicht erkennbar. Anstelle eines zusätzlichen Lagers können in den Wänden des Gehäuses auch lediglich Öffnungen vorgesehen sein, deren Querschnitt nur wenig größer ist als der Querschnitt der Stangen. Damit haben die Stangen ausreichend Spiel, um verschoben und gedreht werden zu können.

Zur Begrenzung des Verschiebeweges sind an jeder Stange 2 Scheiben 5 und 6 vorgesehen. Der Verschiebeweg wird damit durch den Griff 3 an einem Ende der Stange 2 und durch die Scheibe 5 am anderen Ende der Stange 2 begrenzt. Der Abstand von Griff 3 und Scheibe 5 an einer Stange 2 hängt davon ab, welcher Positionsreihe die Stange zugeordnet ist. Die Positionsreihe des Torhüters hat beispielsweise einen anderen Verschiebeweg als die Positionsreihe der Verteidiger. Aus diesem Grund befindet sich die Scheibe 6 bei einer der Stangen 2 unmittelbar am Stangenende, während sie bei anderen Stangen mit einem Abstand zum Stangenende angeordnet ist.

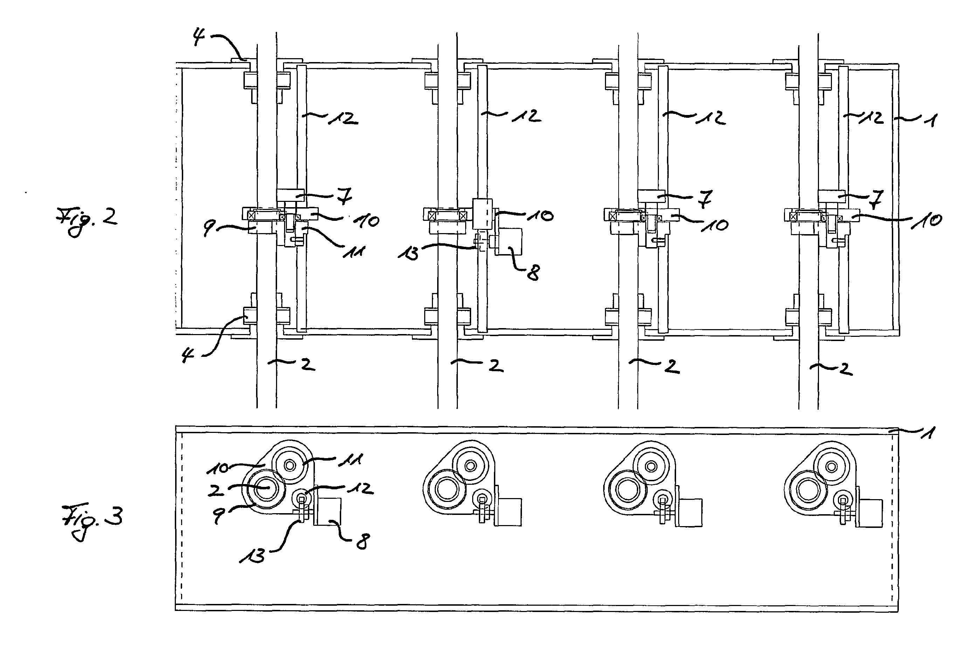

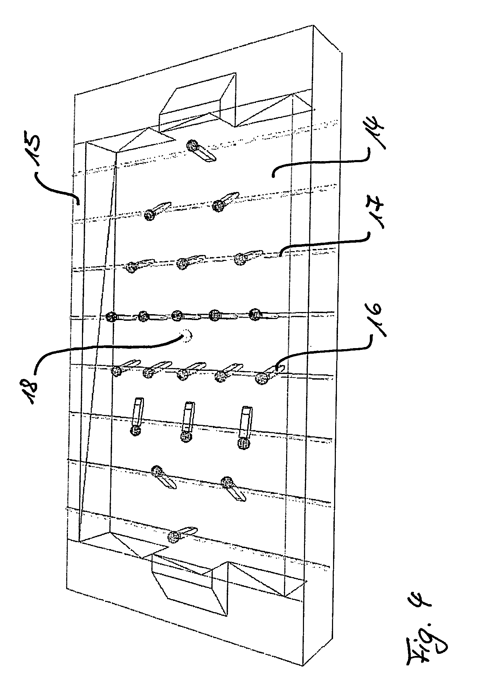

Die Figuren 2 und 3 zeigen die Vorrichtungen gemäß Figur 1 in einer Ansicht von oben und von der Seite bei geöffnetem Gehäuse 1. In dieser Darstellung sind die Stangen 2 und die Lager 4 erkennbar. Darüber hinaus zeigt die Darstellung die Potentiometer 7 und 8 und ein Getriebe zur Übertragung der Translation und Rotation der Stangen 2 auf die Potentiometer 7 und 8. Alle vier Stangen sind mit demselben Getriebe und denselben Potentiometern 7 und 8 ausgestattet. Zur vereinfachten Darstellung zeigt jedoch nur die zweite Stange von links in Figur 2 das Potentiometer 8 zur Bestimmung der Translation der Stangen während die übrigen drei Stangen nur das Potentiometer 7 zur Bestimmung der Rotation der Stangen aufweisen. In Figur 3 sind alle vier Getriebe identisch dargestellt.

Die Getriebe bestehen im wesentlichen aus Zahnrädern und einer Zahnstange. Zur Übertragung der Rotationsbewegung einer Stange auf das Potentiometer 7 ist an den Stangen 2 ein Zahnrad 9 vorgesehen. An einem Schlitten 10 ist das Potentiometer 7 befestigt. Dieses wiederum ist mit einem Zahnrad 11 verbunden, welches in das Zahnrad 9 eingreift. Eine Rotationsbewegung der Stange 2 wird somit über die Zahnräder 9 und 11 auf das Potentiometer 7 übertragen.

Zur Übertragung der Translationsbewegung der Stangen 2 auf die Potentiometer 8 sind an dem Gehäuse Zahnstangen 12 befestigt. Diese verlaufen parallel zu den Stangen 2. Das Potentiometer 8 ist an dem Schlitten 10 befestigt. Es greift mit einem Zahnrad 13 in die Zahnstange 12 ein. Beim Verschieben der Stange 2 wird das Potentiometer 8 relativ zu der Zahnstange 12 verschoben, wodurch das Potentiometer 8 über das an der Zahnstange 12 abrollende Zahnrad 13 betätigt wird.

Figur 4 zeigt eine Darstellung des Tischkickers auf einem Bildschirm. Es handelt sich um eine dreidimensionale Darstellung. Auf dem Bildschirm sind das Spielfeld 14 mit der Spielfeldbegrenzung 15, die Spielfiguren 16 mit den zugehörigen Stangen 17 und der Ball 18 erkennbar.

Sämtliche Merkmale der Erfindung können sowohl einzeln als auch in beliebiger Kombination miteinander erfindungswesentlich sein.

### Bezugszahlen

- 1: Gehäuse
- 2: Stange
- 3: Griff
- 4: Lager
- 5: Scheibe
- 6: Scheibe
- 7: Potentiometer
- 8: Potentiometer
- 9: Zahnrad
- 10: Schlitten
- 11: Zahnrad
- 12: Zahnstange
- 13: Zahnrad
- 14: Spielfeld
- 15: Spielfeldbegrenzung
- 16: Spielfigur
- 17: Stange
- 18: Ball

## Patentansprüche

1. Vorrichtung zur Eingabe von Steuersignalen an einen Rechner, bei welchem eine Anzeigeeinrichtung zur Anzeige eines Spielfeldes, von in mehreren parallel verlaufenden Positionsreihen angeordneten Spielfiguren und eines Balles eines computerbasierten simulierten Tischfußballspieles vorgesehen ist, mit einem Gehäuse (1),
mit mehreren Stangen (2) in dem Gehäuse (1), welche in axialer Richtung verschiebbar und um mindestens 360° um die eigene Achse drehbar gelagert sind,
mit einem Sensor (.8) zur Erfassung der Translation an jeder Stange (2), welcher die Position der Stange in axialer Richtung durch mechanisch berührende Ankopplung oder berührungsfrei kontinuierlich ermittelt,
mit einem Sensor (7) zur Erfassung der Rotation an jeder Stange (2), welcher den Drehwinkel der Stange (2) bezüglich einer Rotation um die eigene Achse durch mechanisch berührende Ankopplung oder berührungsfrei kontinuierlich ermittelt und
mit einer Schnittstelle zur Übertragung der Daten der Sensoren an einen Rechner,
**dadurch gekennzeichnet,**
***dass*** *mindestens zwei Lager (4) oder Öffnungen an dem Gehäuse für jede der Stangen vorgesehen sind,*
**dass** *Begrenzungen des Verschiebewegs an den Stangen (2) vorgesehen sind,*
***dass** an den Stangen eine Bremse zur Verzögerung oder Blockade der Rotation einer Stange in eine Richtung vorgesehen ist, dass die Bremse über eine Schnittstelle mit dem Rechner verbunden ist, um die Bremse durch den Rechner auszulösen, wenn eine bestimmte Spielsituation bei dem simulierten Tischfußballspiel gegeben ist.*

2. Vorrichtung nach Anspruch 1, **dadurch gekennzeichnet, dass** zu jeder auf dem Anzeigeeinrichtung angezeigten Positionsreihe einer Mannschaft des Tischfußballspiels eine Stange (2) vorgesehen ist.

3. Vorrichtung nach Anspruch 1 oder 2, **dadurch gekennzeichnet, dass** an dem Gehäuse (1) nebeneinander und parallel zueinander vier Stangen (2) vorgesehen sind, deren Enden an mindestens einer Seite des Gehäuses nach außen ragen.

4. Vorrichtung nach Anspruch 1 oder 2, **dadurch gekennzeichnet, dass** an dem Gehäuse nebeneinander und parallel zueinander acht Stangen vorgesehen sind, wobei die einem ersten Benutzer zugewandten Enden von vier Stangen an einer Seite des Gehäuses nach außen ragen und die einem zweiten Benutzer zugewandten Enden von vier weiteren Stangen an der gegenüberliegenden Seite des Gehäuses nach außen ragen.

5. Vorrichtung nach einem der vorhergehenden Ansprüche, **dadurch gekennzeichnet, dass** als Sensoren optische, mechanische, magnetische, induktive oder elektrische Sensoren vorgesehen sind.

6. Vorrichtung nach einem der vorhergehenden Ansprüche, **dadurch gekennzeichnet, dass** als Sensoren Potentiometer (7, 8) vorgesehen sind.

7. Vorrichtung nach Anspruch 6, **dadurch gekennzeichnet, dass** ein Getriebe (9, 10, 11, 12, 13) an den Stangen (2) zum Auslösen der Potentiometer (7, 8) vorgesehen ist.

8. Vorrichtung nach Anspruch 7, **dadurch gekennzeichnet, dass** an der Stange (2) ein erstes Zahnrad (9) vorgesehen ist, und dass an dem Potentiometer (7) zur Bestimmung der Rotation ein zweites Zahnrad (11) vorgesehen ist, welches in das erste Zahnrad (9) eingreift.

9. Vorrichtung nach Anspruch 7, **dadurch gekennzeichnet, dass** an der Stange (2) ein Schlitten (10) angeordnet ist, dass an dem Schlitten (10) das mit einem Zahnrad (13) ausgestattete Potentiometer (8) zur Bestimmung der Translation befestigt ist, dass parallel zur Stange (2) an dem Gehäuse (1) eine nichtverschiebbare Zahnstange (12) vorgesehen ist, wobei das Zahnrad (13) in die Zahnstange (12) eingreift.

10. Vorrichtung nach Anspruch 8 und 9, **dadurch gekennzeichnet, dass** an dem Schlitten (10) das Potentiometer (7) zur Bestimmung der Rotation befestigt ist.

11. Vorrichtung nach einem der Ansprüche 1 bis 5, **dadurch gekennzeichnet, dass** an dem Gehäuse als Sensor zur Bestimmung der Translation einer Stange mindestens ein optischer Entfernungsmesser und an der zugehörigen Stange ein Geber zum Auslösen des Entfernungsmessers vorgesehen ist oder ein Teil der Stange als Geber dient.

12. Vorrichtung nach Anspruch 11 **dadurch gekennzeichnet, dass** an den Stangen eine Scheibe vorgesehen ist, welche mit einem Muster ausgestattet ist, und dass an dem Gehäuse als Sensor zur Bestimmung der Rotation einer Stange mindestens ein optischer Sensor zur Abtastung des Musters der Scheibe vorgesehen ist.

13. Vorrichtung nach Anspruch 11 **dadurch gekennzeichnet, dass** an dem Gehäuse als Sensor zur Bestimmung der Rotation einer Stange mindestens ein Entfernungsmesser und an der zugehörigen Stange eine Scheibe entweder unter einem von 90° verschiedenen Winkel gegen die Achse der Stange geneigt oder exzentrisch zur Achse der Stange angeordnet ist.

14. Vorrichtung nach einem der Ansprüche 1 bis 5, **dadurch gekennzeichnet, dass** der Sensor eine an der Stange anliegende, frei drehbare Rollkugel aufweist, dass zwei Walzen vorgesehen sind, die an der Rollkugel anliegen und deren Bewegung abgreifen, dass an den Walzen Lochscheiben vorgesehen sind, und dass an den Lochscheiben Leuchtdioden und Sensoren zum Detektieren der durch die Löcher der Lochscheiben hindurchtretenden Lichtpulse der Leuchtdioden vorgesehen sind.

15. Vorrichtung nach einem der Ansprüche 1 bis 5, **dadurch gekennzeichnet, dass** die Sensoren mindestens eine Lichtquelle aufweisen, und dass mindestens ein optischer Sensor vorgesehen ist, welcher das von der Stange reflektierte Licht aufnimmt.

16. Vorrichtung nach Anspruch 15, **dadurch gekennzeichnet, dass** an der Stange ein Raster vorgesehen ist.

## Claims

1. Device for inputting control signals to a computer, which is provided with a display unit to display a playing field for playing figures arranged in several parallel rows and a ball forming part of a computer-based simulated table football game, having a housing (1), having multiple rods (2) in the housing (1) which are mounted so as to be slidable in an axial direction and rotatable around their own axes by at least 360°, having a sensor (8) for on each rod (2) to determine translation, which continuously determines the position of the rod in an axial direction by means of a mechanical contact connection or a non-contact method, having a sensor (7) on each rod (2) to determine rotation, which continuously determines the angle of rotation of the rod (2) with regard to rotation around its own axis by means of a mechanical contact connection or a non-contact method, and having an interface to transfer the data received by the sensors to a computer, **characterised in that** *at least two bearings (4) or openings are provided in the housing for each of the rods, that that devices to limit the travel are attached to the rods (2)*, a brake is provided on the rods to retard or block the rotation of a rod in a direction, and the brake is connected to the computer via an interface in order to that the brake can be actuated by the computer whenever a certain situation arises in the simulated table football game.

2. Device according to claim 1, **characterised in that** a rod (2) is provided for each of the rows of a team of the table football game displayed on the display unit.

3. Device according to claim 1 or 2, **characterised in that** four rods (2) are positioned next to each other and parallel to each other in the housing (1), the ends of which protrude from at least one side of the housing (1).

4. Device according to claim 1 or 2, **characterised in that** eight rods are positioned next to each other and parallel to each other in the housing, whereby the ends of four rods facing a first user protrude from one side of the housing and the ends of four further rods facing a second user protrude from the opposite side of the housing.

5. Device according to one of the previous claims, **characterised in that** the sensors provided comprise optical, mechanical, magnetic, inductive or electric sensors.

6. Device according to one of the previous claims, **characterised in that** potentiometers (7, 8) are provided as sensors.

7. Device according to claim 6, **characterised in that** a gear unit (9, 10, 11, 12, 13) is provided on the rods (2) to actuate the potentiometers (7, 8).

8. Device according to claim 7, **characterised in that** a first toothed wheel (9) is provided on the rod (2) and a second toothed wheel (11) which engages with the first toothed wheel (9) is provided on the potentiometer used to determine the rotation.

9. Device according to claim 7, **characterised in that** a carriage (10) is positioned on the rod (2), the potentiometer (8) equipped with a toothed wheel (13) used to determine translation is attached to the carriage (10) and a non-displaceable gear rack (12) is provided on the housing (1) parallel to the rod (2), whereby the toothed wheel (13) engages with the gear rack (12).

10. Device according to claims 8 and 9, **characterised in that** the potentiometer (7) used to determine rotation is attached to the carriage (10),

11. Device according to one of claims 1 to 5, **characterised in that** at least one optical distance measuring device is provided on the housing as a sensor used to determine translation and a transmitting device to trigger the distance measurement is provided on the corresponding rod or a part of the rod services as a transmitting device.

12. Device according to claim 11, **characterised in that** a disk is provided on the rods which is provided with a pattern, and at least one optical sensor used to scan the pattern on the disk is provided on the housing as a sensor used to determine the rotation of the rod.

13. Device according to claim 11, **characterised in that** at least one distance measuring device is provided on the housing used as a sensor to determine the rotation of a rod and a disk is arranged on the corresponding rod either inclined towards the rod's axis at an angle other than 90° or positioned off-centre from the rod's axis.

14. Device according to one of claims 1 to 5, **characterised in that** the sensor features a freely-rotating trackball adjacent to the rod, two rollers are provided which are positioned adjacent to the trackball and which measure the movements of the trackball, perforated disks are provided on the rollers and light-emitting diodes and sensors are provided on the perforated disks to detect the pulses of light from the light-emitting diodes that pass through the holes of the perforated disks.

15. Device according to one of claims 1 to 5, **characterised in that** the sensors feature at least one light source and at least one optical sensor is provided which picks up the light reflected from the rod.

16. Device according to claim 15, **characterised in that** a bar pattern is provided on the rod.

## Revendications

1. Dispositif de saisie de signaux de commande sur un ordinateur, pour lequel un système d'affichage d'un terrain, de joueurs disposés sur plusieurs rangées parallèles et d'un ballon d'un jeu de simulation de baby-foot sur ordinateur est prévu, avec un boîtier (1), avec plusieurs barres (2) insérées dans le boîtier (1), lesquelles peuvent être déplacées axialement et tournées d'au moins 360° autour de leur propre axe, avec un capteur (8) pour la saisie du déplacement de chaque barre (2), lequel détermine en continu la position de la barre dans le sens axial grâce à un couplage mécanique à contact ou à une détection sans contact, avec un capteur (7) pour la saisie de la rotation de chaque barre (2), lequel détermine en continu l'angle de rotation de la barre (2) par rapport à une rotation autour de son propre axe grâce à un couplage mécanique à contact ou à une détection sans contact et avec une interface destinée au transfert des données des capteurs sur un ordinateur, **caractérisé par le fait *qu'****au moins deux paliers (4) ou ouvertures sont prévu(e)s sur le boîtier pour chacune des barres, que des butées sont prévues pour limiter la course de déplacement des barres (2)*, que les barres sont dotées d'un frein afin de ralentir ou de bloquer la rotation d'une barre dans un sens, que le frein est connecté à l'ordinateur par le biais d'une interface afin que le frein puisse être déclenché par l'ordinateur lorsqu'une certaine situation de jeu se présente.

2. Dispositif selon la revendication 1, **caractérisé par le fait qu'**une barre (2) est prévue pour chaque rangée de joueurs d'une équipe du jeu de baby-foot affichée sur le système d'affichage.

3. Dispositif selon la revendication 1 ou 2, **caractérisé par le fait que** quatre barres (2) sont disposées côte à côte et de façon parallèle dans le boîtier (1) et que les extrémités de ces barres dépassent du boîtier au moins d'un côté.

4. Dispositif selon la revendication 1 ou 2, **caractérisé par le fait que** huit barres sont disposées côte à côte et de façon parallèle dans le boîtier, les extrémités des quatre barres dirigées vers un premier joueur sortant d'un des côtés du boîtier et les extrémités des quatre autres barres dirigées vers un second joueur sortant du côté opposé du boîtier.

5. Dispositif selon l'une des revendications précédentes, **caractérisé par le fait que** des capteurs optiques, mécaniques, magnétiques, inductifs ou électriques sont prévus en guise de capteurs.

6. Dispositif selon l'une des revendications précédentes, **caractérisé par le fait que** des potentiomètres (7, 8) sont prévus en guise de capteurs.

7. Dispositif selon la revendication 6, **caractérisé par le fait qu'**un mécanisme (9, 10, 11, 12, 13) est prévu au niveau des barres (2) pour déclencher les potentiomètres (7, 8).

8. Dispositif selon la revendication 7, **caractérisé par le fait que** la barre (2) est dotée d'une première roue dentée (9) et que le potentiomètre (7) est équipé d'une deuxième roue dentée (11) pour déterminer la rotation, laquelle roue s'engrène dans la première roue dentée (9).

9. Dispositif selon la revendication 7, **caractérisé par le fait que** la barre (2) est dotée d'un coulisseau (10), que le potentiomètre (8) équipé d'une roue dentée (13) est fixé sur le coulisseau (10) afin de déterminer le déplacement, qu'une crémaillère fixée de manière inamovible (12) et parallèle à la barre (2) est prévue sur le boîtier (1), la roue dentée (13) s'engrenant dans la crémaillère (12).

10. Dispositif selon les revendications 8 et 9, **caractérisé par le fait que** le potentiomètre (7) est fixé sur le coulisseau (10) afin de déterminer la rotation.

11. Dispositif selon l'une des revendications 1 à 5, **caractérisé par le fait qu'**au moins un télémètre optique est prévu dans le boîtier en guise de capteur pour déterminer le déplacement d'une barre et qu'un transmetteur est prévu sur la barre correspondante pour déclencher le télémètre ou qu'une partie de la barre sert de transmetteur.

12. Dispositif selon la revendication 11, **caractérisé par le fait que** les barres sont dotées d'une rondelle sur laquelle figure un dessin, et qu'au moins un capteur optique destiné à détecter ledit dessin de la rondelle est prévu sur le boîtier comme capteur de rotation de barre.

13. Dispositif selon la revendication 11, **caractérisé par le fait que** le boîtier est doté d'au moins un télémètre comme capteur de rotation d'une barre et qu'une rondelle est disposée à un angle de 90° par rapport à l'axe de la barre correspondante ou de manière excentrique par rapport à l'axe de la barre.

14. Dispositif selon l'une des revendications 1 à 5, **caractérisé par le fait que** le capteur présente une boule de commande mobile et en contact avec la barre, que deux rouleaux en contact avec la boule de commande et captant ses mouvements sont prévus, que des rondelles ajourées sont prévues sur les rouleaux, et que les rondelles ajourées sont dotées de diodes électroluminescentes et de capteurs pour détecter les impulsions lumineuses des diodes électroluminescentes passant à travers les trous des rondelles ajourées.

15. Dispositif selon l'une des revendications 1 à 5, **caractérisé par le fait que** les capteurs présentent au moins une source lumineuse, et qu'au moins un capteur optique captant la lumière réfléchie par la barre est prévu.

16. Dispositif selon la revendication 15, **caractérisé par le fait que** la barre est munie d'une trame.
